# EUROPEAN PATENT SPECIFICATION

(11) **EP 2 759 526 B1**
(45) Date of publication and mention of the grant of the patent: **09.01.2019**
(21) Application number: 12833447.1
(22) Date of filing: 12.09.2012
(51) Int. Cl.: C09K 3/14, C23C 18/12

(54) **COMPOSITE PARTICLES FOR POLISHING GLASS**
VERBUNDPARTIKEL ZUM POLIEREN VON GLAS
PARTICULES COMPOSITES POUR POLIR LE VERRE

(30) Priority: 20.09.2011 JP 2011205029
(43) Date of publication of application: 30.07.2014
(73) Proprietor: Sakai Chemical Industry Co., Ltd., Sakai-shi, Osaka 590-8502 (JP)
(72) Inventor: KAWASAKI, Yuji, Iwaki-shi Fukushima 971-8183 (JP); KAWAGISHI, Hirotaka, Tokyo 101-0032 (JP); YAMAMOTO, Tsutomu, Iwaki-shi Fukushima 971-8183 (JP); MIKAMI, Masaru, Iwaki-shi Fukushima 971-8183 (JP); TERABE, Atsuki, Iwaki-shi Fukushima 971-8183 (JP)
(74) Representative: Hart-Davis, Jason
(86) International application number: PCT/JP2012/073350
(87) International publication number: WO 2013/042596

(56) References cited:
- WO-A1-2010/139603
- JP-A- H11 114 808
- JP-A- 2002 097 456
- JP-A- 2002 138 218
- JP-A- 2003 171 124
- JP-A- 2007 258 606
- JP-A- 2012 214 337
- US-B1- 6 645 265

## Description

### TECHNICAL FIELD

The present invention relates to composite particulate material for polishing glass.

### BACKGROUND ART

Cerium oxide polishing materials are used for polishing of precise optical glass (e.g., lens, prism) which requires high transparency and accuracy and glass substrates used for display glasses and magnetic hard disks.

The polishing materials are produced by firing and grinding minerals containing much rare earth elements.

Polishing of glass products using cerium oxide is performed by chemical mechanical polishing (CMP) that combines mechanical polishing and chemical polishing.

The chemical mechanical polishing is a method in which alteration of glass caused by chemical reaction between polishing materials and glass to be polished is utilized for facilitating mechanical polishing by the polishing material. Chemical mechanical polishing enables polishing at a high polishing rate and production of smooth planes, and therefore is suitably employed for polishing of precise optical glass which requires high transparency and accurate smoothness and glass substrates.

Patent Literature 1 discloses an abrasive material for polishing glass formed of a cerium oxide abrasive material and a hard abrasive material composed of aluminum oxide and/or silicon carbide, wherein the amount of the hard abrasive material is 0.5 to 50 parts by weight for 100 parts by weight of the cerium oxide abrasive material.

Patent Literature 2 discloses a method of polishing glass in which glass polished with abrasive materials such as cerium oxide is further polished with an abrasive material composition for glass containing titanium oxide fine particles.

### CITATION LIST

### - Patent Literature

Patent Literature 1: JP-A 2000-256657
Patent Literature 2: JP-A 2000-345143

US 6,645,265 B1, WO 2010/139603 A1, JP 2002-138218 A and JP 2003-171124 A show particles comprising a ceramic core and cerium oxide deposited thereon.

### SUMMARY OF INVENTION

### - Technical Problem

A recent increasing demand for rare earths destabilizes the supply thereof, leading to needs for developing techniques for reducing the usage of cerium and using alternative materials.

The abrasive material for polishing glass disclosed in Patent Literature 1 does not consist only of cerium oxide but mainly contains a cerium oxide abrasive material. Accordingly, the used amount of cerium oxide is still large.

The method of polishing glass disclosed in Patent Literature 2 uses titanium oxide for polishing. Titanium oxide has a high Mohs hardness but is less reactive with glass to be polished, failing to cause so-called chemical polishing. This problematically results in a low polishing rate.

Patent Literature 2 teaches that it is preferable to perform polishing with an abrasive material composition having high abrasion efficiency, such as cerium oxide, prior to polishing with titanium oxide.

In other words, the method of polishing glass disclosed in Patent Literature 2 requires use of cerium oxide as an abrasive material. Accordingly, the method fails to reduce the used amount of cerium oxide.

The present invention aims to provide a particulate material for polishing glass which contains a smaller amount of cerium, a rare earth element, and shows enough polishing performance to replace with conventionally used cerium oxide.

### - Solution to problem

The invention is defined in the claims. Specifically, the first aspect of the present invention provides a composite particulate material of claim 1 for polishing glass, each particle thereof including: a base particle selected from a particle of titanium oxide, zirconium oxide, barium sulfate, synthetic mica, zinc oxide, and calcium carbonate; and one or more cerium oxide particles carried on the surface of the base particle.

### - Advantageous Effects

The composite particulate material for polishing glass of claim 1 contains a base particle selected from a particle of titanium oxide, zirconium oxide, barium sulfate, synthetic mica, zinc oxide, and calcium carbonate. In polishing of glass using the composite particulate material for polishing glass of claim 1, one or more cerium oxide particles carried on the surface of the base particle first come in contact with the glass surface to perform chemical polishing. This enables polishing at a similar polishing rate as that in the case of using a polishing material mainly containing cerium oxide. The base particle has a high Mohs hardness, and therefore is not easily worn, enabling maintenance of the polishing rate.

Use of the composite particulate material for polishing glass of claim 1 reduces the used amount of cerium, a rare earth element.

### BRIEF DESCRIPTION OF DRAWINGS

Fig. 1 is an exemplary electron microscope picture of the composite particulate material for polishing glass of the present invention.
Fig. 2 is an exemplary electron microscope picture of a particle that is prepared by covering the surface of a titanium oxide particle with a cerium oxide precursor and is not subjected to firing treatment.

### DESCRIPTION OF EMBODIMENTS

The composite particulate material for polishing glass of the present invention is described in the following.

The composite particulate material for polishing glass of claim 1 contains particles and each particle thereof including: a base particle selected from a particle of titanium oxide, zirconium oxide, barium sulfate, synthetic mica, zinc oxide, and calcium carbonate; and one or more cerium oxide particles carried on the surface of the base particle.

The cerium oxide particles are insularly carried on the base particle.

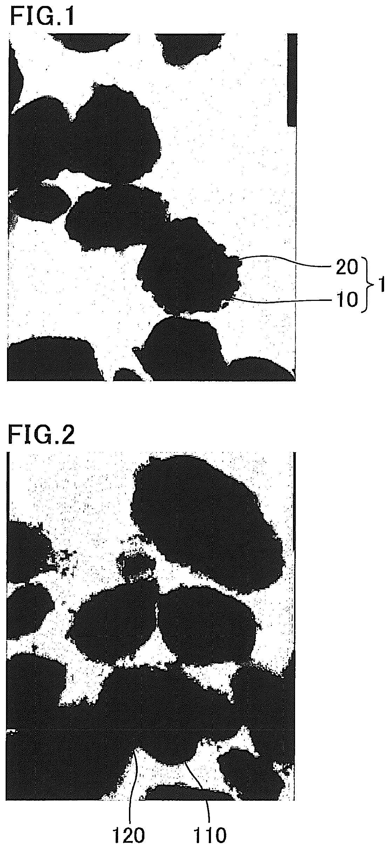

Fig. 1 is an exemplary electron microscope picture of the composite particulate material for polishing glass of the present invention.

A composite particle 1 for polishing glass shown in Fig. 1 includes a titanium oxide particle 10 as a base particle and one or more cerium oxide particles 20 carried insularly on the surface of the titanium oxide particle 10.

The state "carried insularly" refers to a state where the cerium oxide particles are carried in such a manner that the profile of each particle thereof is distinguishable and are projecting from the surface of the base particle in an electron micrograph. Specifically, that state refers to the presence of the cerium oxide particles projecting at least 0.01 µm from the surface of the base particle.

In other words, when the surface of the base particle is assumed to be the sea, the cerium oxide particles seem to be islands floating in the sea. Such a state of the cerium oxide particles is referred to be an "insular" state.

The production method, shape, crystal form, and particle size of the titanium oxide particle is not limited at all. For example, the titanium oxide particle may be produced by a chlorine method or sulfuric acid method.

The crystal form is preferably the rutile type as it increases the polishing rate. Alternatively, the crystal form may be the anatase type, the brookite type, or a mixture of these.

The composite particulate material for polishing glass shown in Fig. 1 includes a titanium oxide particle as a base particle. The base particle may be, instead of a titanium oxide particle, a particle of zirconium oxide, barium sulfate, or synthetic mica.

The zirconium oxide particle may be a cubic or tetragonal particle, or a mixture of these.

The barium sulfate particle is not limited at all, and examples thereof include a particle of precipitated barium sulfate obtainable by a method such as mirabilite method and sulfuric acid method, and a particle of ground barite obtainable by dressing and grinding barite. An exemplary commercial product thereof is precipitated barium sulfate BF-1 (0.05 µm, SAKAI CHEMICAL INDUSTRY CO., LTD.).

The synthetic mica particle is not limited at all, and examples thereof include a particle of fluorphlogophite and tetrasilicic mica.

The base particle may also be a zinc oxide or calcium carbonate particle.

Examples of the zinc oxide particle include zinc oxide particles of JIS No. 1, 2, and 3. An exemplary commercial product thereof is LPZINC-2 (2 µm, SAKAI CHEMICAL INDUSTRY CO., LTD.).

Examples of the calcium carbonate particle include a particle of so-called heavy calcium carbonate obtainable by grinding limestone and a particle of synthetic calcium carbonate obtainable by chemical reaction. An exemplary commercial product thereof is synthetic calcium carbonate "HAKUENKA 0" (0.03 µm, SHIRAISHI KOGYO).

The base particle may have a spherical, plate, or acicular shape. Especially, in a case where the base particle is a particle of titanium oxide, barium sulfate, synthetic mica, or zinc oxide, the particle is preferably a plate-like particle. In particular, a zinc oxide plate-like particle used as the base particle favorably contributes to a polishing rate higher than that in the case of using a spherical zinc oxide particle.

The average primary particle size of the base particle is not limited at all, and is preferably 0.01 to 5 µm. The average primary particle size is more preferably 0.1 to 3 µm and still more preferably 0.2 to 2 µm. The titanium oxide particle having an average primary particle size of less than 0.01 µm may lower the polishing rate.
The titanium oxide particle having an average primary particle size of more than 5 µm may cause scratches on a glass surface if contained in a composite particulate material for polishing glass.

The average primary particle size herein refers to the average of the unidirectional particle sizes (µm) (the interval between two parallel lines sandwiching a particle) of 1000 individual particles (not overlapped with one another) measured in a visual field of an image observed by transmission electron microscope (TEM) taken at 20,000 magnification.

The base particle may be further surface-treated with alumina before being provided with cerium oxide particles. The base particle surface-treatment with alumina is preferable as the polishing rate increases. The surface-treated base particle is obtained by surface-treating a base material with alumina, having one or more cerium oxide particles carried on the base material which had been surface treated with alumina, and firing the resulting base material at a temperature within the range from 900°C to 950°C. Moreover, a composite particulate material obtained by firing at a temperature within the range from 950°C to 1000°C is preferable as the polishing rate further increases.

The cerium oxide particle is described below. The raw material of the cerium oxide particle is not limited at all, and may be, for example, chloride, nitrate, halide, sulfate, carbonate, or ammonium nitrate of cerium. To an aqueous solution of such a raw material is added an alkali such as ammonia water and sodium hydroxide, or an inorganic or organic acid such as sulfuric acid and oxalic acid, thereby giving a precipitate of a hydroxide or oxalate. The precipitate is used as a cerium oxide precursor.

The cerium oxide precursor is fired to give a cerium oxide particle.

Alternatively, the cerium oxide precursor may be treated by the Solvothermal method, namely, heating at high temperature under high pressure, to give a cerium oxide particle.

Moreover, the cerium oxide particle may be prepared as follows. A raw material of the cerium oxide particle is blended with 0.01 to 25% by weight (in terms of oxide) of a fluorine compound, phosphoric acid, alkali metal salt, or alkaline earth metal salt, relative to 100% by weight of titanium oxide. Then, an alkali, inorganic acid, or organic acid is added thereto to give a cerium oxide precursor containing fluorine, phosphor, an alkali metal, or an alkaline earth metal. The cerium oxide precursor subjected to firing gives a cerium oxide particle composited with a compound containing at least one element selected from the group consisting of fluorine, phosphor, an alkali metal, and an alkaline earth metal.

The cerium oxide particle composited with a fluorine, phosphor, alkali metal, or alkaline earth metal compound advantageously increases the polishing rate. In a case where the amount of fluorine, phosphor, an alkali metal, or an alkaline earth metal is more than 25% by weight in terms of oxide, though the effect obtainable by addition thereof is plateaued, the polishing rate may be lowered as the amount of the base particle is reduced.

One or more cerium oxide particles carried insularly on the base-particle surface preferably have an average primary particle size of 0.02 to 0.10 µm.

The cerium oxide particles may contain trivalent or quadrivalent cerium. From the standpoint of further facilitating chemical polishing, the composite particulate material of the present invention preferably includes one or more cerium oxide particles containing trivalent cerium carried on the base particle.

When the composite particulate material of the present invention is used for polishing glass, the cerium oxide particles carried on the surface of the base particle first come in contact with the glass surface to perform chemical polishing. This enables polishing at a similar polishing rate as that in the case of using a conventional polishing material mainly containing cerium oxide. The base particle has a high Mohs hardness, and therefore is not easily worn, enabling efficient physical polishing. As a result, a high polishing rate is maintained for a long period of time.

Specifically, polishing using the composite particulate material for polishing glass of the present invention includes chemical polishing by cerium oxide that is highly reactive with glass and physical polishing by the base particle having a high Mohs hardness in combination. Accordingly, the composite particulate material for polishing glass of the present invention may have a smaller cerium oxide content and can maintain a high polishing rate for a long period of time.

An exemplary method for producing the composite particulate material for polishing glass of the present invention is illustrated in the following.

The composite particulate material for polishing glass of the present invention is obtainable by a process including the steps of: covering the surface of a base particle selected from a particle of titanium oxide, zirconium oxide, barium sulfate, synthetic mica, zinc oxide, and calcium carbonate, with a cerium oxide precursor; firing the thus-covered particle at a temperature within the range from 250°C to 1200°C; and grinding the fired particle. The base particle may be surface-treated with alumina.

Specifically, in the above process, the base particle is added to water to prepare a slurry. To the slurry maintained at 20°C to 90°C was added a raw material of a cerium oxide precursor. The slurry containing the raw material of a cerium oxide precursor is neutralized using a sodium hydroxide aqueous solution to a pH of 6 to 8 and aged for 10 to 60 minutes.

The slurry is then subjected to washing, solid-liquid separation, and drying.

The drying is preferably performed at a temperature in the range from 100°C to 150°C for about 1 to 8 hours.

In this manner, a zone covered with a cerium oxide precursor is formed on the surface of the base particle.

The addition amount of the raw material of the cerium oxide precursor is preferably 1 to 50% by weight in terms of cerium oxide for 100% by weight of the base particles. The addition amount is more preferably 3 to 20% by weight and still more preferably 5 to 10% by weight.

If the addition amount of the raw material of a cerium oxide precursor is less than 1% by weight in terms of cerium oxide, the amount of carried cerium oxide is not enough, which may result in lowered polishing rate. If the addition amount of the raw material of a cerium oxide precursor is more than 50% by weight in terms of cerium oxide, the consumption of cerium oxide is unfavorably increased without achieving the polishing rate comparable to the increase in the addition amount.

Next, a particle formed of the base particle covered with the cerium oxide precursor obtained above process is fired.

In this firing step, the cerium oxide precursor is formed into one or more cerium oxide particles and carried insularly on the base-particle surface, thereby forming a composite particulate material.

Fig. 1 shows the state of the composite particulate material for polishing glass obtained above process.

The firing temperature is preferably within the range from 250°C to 1200°C. The firing temperature is more preferably within the range from 500°C to 1000°C, and still more preferably within the range from 700°C to 1000°C.

The firing time is preferably 0.5 to 3 hours.

If the firing temperature is lower than 250°C, the cerium oxide particles may not be carried insularly. In a case where such a composite particulate material is used for polishing, the polishing rate may be lowered.

If a composite particulate material fired at higher than 1200°C is used for polishing glass, scratching formed on a glass surface may be increased.

Fig. 2 is an exemplary electron microscope picture of a particle that is prepared by covering a titanium oxide particle with a cerium oxide precursor and is not subjected to firing treatment.

Fig. 2 shows a particle ground without subjected to firing treatment.

Fig. 2 shows a titanium oxide particle 110 having the surface covered with cerium hydroxide 120 that is a cerium oxide precursor. The cerium hydroxide 120 is formed not in a particulate form but in a spread layer form covering the titanium oxide particle 110.

The polishing rate is not increased in the case where the polishing material used is a particulate material in which a cerium oxide precursor on the surface of a titanium oxide particle (base particle) is not fired to cover the base particle without converted to cerium oxide as shown in Fig. 2.

The reason for this phenomenon is that chemical polishing is not promoted by a cerium oxide precursor such as cerium hydroxide.

The fired particle is optionally ground with a hammer mill or the like for the purpose of reducing strong agglomeration, thereby giving a composite particulate material for polishing glass including a base particle and one or more cerium oxide particles carried insularly on the base particle surface.

Another method for producing the particulate material for polishing glass of the present invention may be a so-called solid phase method in which a base particle is mixed with the cerium oxide raw material and/or cerium oxide and then fired at 250°C to 1200°C.

More preferred is a method in which the surface of a base particle is covered with a cerium oxide precursor and then fired, because insular cerium oxide particles are formed uniformly on the base-particle surface and the polishing rate is increased.

### EXAMPLES

Examples of the present invention are described below. The present invention is not limited only to these examples. In the following, "%" means "% by weight".

### (Example 1)

To water was added rutile type titanium oxide prepared by the sulfuric acid method and having an average primary particle size of 0.40 µm, thereby giving an aqueous slurry having a TiO₂ concentration of 400 g/L. A 0.5 L portion of this slurry was adjusted to 70°C with stirring. With the temperature maintained, a 40% cerium nitrate aqueous solution was added in an amount of 10 parts by weight, in terms of CeO₂, for 100 parts by weight of TiO₂. The resulting slurry was neutralized with a sodium hydroxide aqueous solution to a pH of 7 and then aged for 60 minutes, thereby forming a zone covered with cerium hydroxide on the surface of TiO₂. The slurry containing TiO₂ covered with cerium hydroxide on the surface thereof was subjected to washing, solid-liquid separation, and drying at 120°C for 8 hours. The dried product was fired for one hour under 900°C atmosphere. The fired product was ground with a hammer mill, thereby giving a composite particulate material for polishing glass in which cerium oxide is insularly carried on the surface of a TiO₂ base particle.

### (Example 2)

The composite particulate material for polishing glass was prepared in the same manner as in Example 1, except that rutile type titanium oxide having an average primary particle size of 0.26 µm was used instead of the rutile type titanium oxide having an average primary particle size of 0.40 µm.

### (Example 3)

The composite particulate material for polishing glass was prepared in the same manner as in Example 1, except that a 40% cerium nitrate aqueous solution in an amount of 5 parts by weight in terms of CeO₂ was added.

### (Example 4)

The composite particulate material for polishing glass was prepared in the same manner as in Example 1, except that a 40% cerium nitrate aqueous solution in an amount of 20 parts by weight in terms of CeO₂ was added.

### (Example 5)

The composite particulate material for polishing glass was prepared in the same manner as in Example 1, except that a 40% cerium nitrate aqueous solution in an amount of 50 parts by weight in terms of CeO₂ was added.

### (Example 6)

To rutile type titanium oxide powder prepared by the sulfuric acid method and having an average primary particle size of 0.40 µm was added a 40% cerium nitrate aqueous solution in an amount of 10 parts by weight in terms of CeO₂ and mixed uniformly. The resulting slurry was fired for one hour under 900°C atmosphere. The fired product was ground with a hammer mill to give composite particulate material for polishing glass.

In other words, the composite particulate material for polishing glass was prepared by the solid phase method in Example 6.

### (Example 7)

The composite particulate material for polishing glass was prepared in the same manner as in Example 3, except that the base particle used was a zirconium oxide particle having an average primary particle size of 1.00 µm instead of the titanium oxide particle.

### (Example 8)

The composite particulate material for polishing glass was prepared in the same manner as in Example 1, except that, after addition of a 40% cerium nitrate aqueous solution, magnesium carbonate in an amount of 5 parts by weight, in terms of MgO, for 100 parts by weight of TiO₂ was added, and the resulting slurry was neutralized with a sodium hydroxide aqueous solution to a pH of 7.

### (Example 9)

To water was added rutile type titanium oxide obtained by the sulfuric acid method and having an average primary particle size of 0.40 µm, thereby giving an aqueous slurry having a TiO₂ concentration of 400 g/L. A 0.5 L portion of this slurry was adjusted to 70°C with stirring. With the temperature maintained, a sodium aluminate aqueous solution was added in an amount of 10 parts by weight, in terms of Al₂O₃, for 100 parts by weight of TiO₂. The resulting slurry was neutralized with a 30% sulfuric acid to a pH of 7 and then aged for 60 minutes, thereby forming a zone covered with alumina hydroxide on the surface of TiO₂. The slurry after formation of the covered zone was subjected to washing, solid-liquid separation, and drying at 120°C for 8 hours. The dried product was ground with a fluid-energy mill. To the ground product was added water, thereby giving an aqueous slurry having a concentration of 400 g/L. A 0.5 L portion of this slurry was adjusted to 70°C with stirring. With the temperature maintained, a 40% cerium nitrate aqueous solution was added to the slurry in an amount of 10 parts by weight, in terms of CeO₂, for 100 parts by weight of TiO₂ with stirring. The resulting slurry was then neutralized with a sodium hydroxide aqueous solution to a pH of 7 and then aged for 60 minutes, thereby forming a zone covered with alumina hydroxide and cerium hydroxide sequentially from the inside. The slurry after formation of the covered zone was subjected to washing, solid-liquid separation, and drying at 120°C for 8 hours. The dried product (A) was fired for one hour under 900°C atmosphere. The fired product was ground with a hammer mill, thereby giving titanium oxide-containing composite particulate material of the present invention in which cerium oxide is carried on a TiO₂ particle covered with an aluminum oxide layer.

### (Example 10)

The composite particulate material for polishing glass was prepared in the same manner as in Example 9, except that the dried product (A) was fired for one hour under 950°C atmosphere.

### (Example 11)

The composite particulate material for polishing glass was prepared in the same manner as in Example 9, except that spherical zinc oxide (product name: LP-ZINC-2, SAKAI CHEMICAL INDUSTRY CO., LTD.) having an average particle size of 2 µm was used instead of the rutile type titanium oxide.

### (Example 12)

The composite particulate material for polishing glass was prepared in the same manner as in Example 9, except that a calcium carbonate particle having an average particle size of 0.15 µm was used instead of the rutile type titanium oxide.

### (Example 13)

The composite particulate material for polishing glass was prepared in the same manner as in Example 9, except that a hexagonal plate-like zinc oxide particle having an average particle size of 1.0 µm was used instead of the rutile type titanium oxide.

### (Comparative Example 1)

Rutile type titanium oxide having an average primary particle size of 0.26 µm was used as a comparison particulate material for polishing glass.

### (Comparative Example 2)

Rutile type titanium oxide having an average primary particle size of 0.40 µm was used as a comparison particulate material for polishing glass.

### (Comparative Example 3)

To water was added rutile type titanium oxide obtained by the sulfuric acid method and having an average primary particle size of 0.26 µm, thereby giving an aqueous slurry having a TiO₂ concentration of 400 g/L. A 0.5 L portion of this slurry was adjusted to 70°C with stirring. With the temperature maintained, to the slurry was added a 150 g/L sodium aluminate aqueous solution in an amount of 2 parts by weight, in terms of Al₂O₃, for 100 parts by weight of TiO₂. The resulting slurry was neutralized with a sulfuric acid aqueous solution to a pH of 7 and then aged for 60 minutes, thereby forming a zone covered with an alumina hydroxide on the surface of TiO₂. The slurry after formation of the covered zone was subjected to washing, solid-liquid separation, and drying at 120°C for 8 hours. The dried product was ground with a hammer mill to give a comparison particulate material for polishing glass in which an aluminum hydroxide layer was formed on the surface of a TiO₂ base particle.

### (Comparative Example 4)

To water was added rutile type titanium oxide obtained by the sulfuric acid method and having an average primary particle size of 0.26 µm, thereby giving an aqueous slurry having a TiO₂ concentration of 400 g/L. A 0.5 L portion of this slurry was adjusted to 70°C with stirring. With the temperature maintained, to the slurry was added a 40% cerium nitrate aqueous solution in an amount of 10 parts by weight, in terms of CeO₂, for 100 parts by weight of TiO₂. The resulting slurry was neutralized with a sodium hydroxide aqueous solution to a pH of 7 and then aged for 60 minutes, thereby forming a zone covered with a cerium hydroxide on the surface of TiO₂. The slurry after formation of the covered zone was subjected to washing, solid-liquid separation, and drying at 120°C for 8 hours. The dried product was ground with a hammer mill to give a comparison particulate material for polishing glass in which a cerium hydroxide layer was formed on the surface of a TiO₂ base particle.

### (Comparative Example 5)

As a comparison particulate material for polishing glass, rutile type titanium oxide having an average primary particle size of 0.26 µm and cerium oxide for polishing glass "SHOROX A-10"(SHOWA DENKO K.K.) were mixed at a weight ratio (titanium oxide:cerium oxide) of 10:1.

### (Comparative Example 6)

Zirconium oxide having an average primary particle size of 1.00 µm was used as a comparison particulate material for polishing glass.

### (Comparative Example 7)

Cerium oxide for polishing glass "SHOROX A-10" (SHOWA DENKO K.K.) was used as a comparison particulate material for polishing glass.

### (Comparative Example 8)

Spherical zinc oxide (LP-ZINC-2: SAKAI CHEMICAL INDUSTRY CO., LTD.) having an average particle size of 2.0 µm was used as a comparison particulate material for polishing glass.

### (Comparative Example 9)

A hexagonal plate-like zinc oxide particle having an average particle size of 1.0 µm was used as a comparison particulate material for polishing glass.

### (Performance evaluation)

Performance of the particulate materials for polishing glass produced in the examples and comparative examples were evaluated as follows.

### (Preparation of polishing material slurry)

The particulate materials for polishing glass produced in the examples and comparative examples were each used as a polishing material to prepare a polishing material slurry.

Each polishing material was separately added to pure water to the concentration of 30% by weight.

The polishing materials were each dispersed using a high-speed mixer. In this manner, aqueous dispersion-type polishing material slurries were prepared.

### (Glass plate polishing test)

A glass plate was polished using each polishing material slurry under the following conditions.
Glass plate used: Soda-lime glass (Matsunami Glass Ind.,Ltd., S-1111, size: 76 × 26 × 0.8 mm)
Polisher: Single-axis tabletop polisher (Wingo Co., Ltd., L-1000, polishing disk size: 205 mmφ)
Polishing pad: Cerium pad (Wingo Co., Ltd.)
Polishing pressure: 260 g/cm²
Rotation speed of disk: 100 rpm
Rate of polishing material slurry feed: 3 ml/min
Polishing time: 30 min

### (Polishing rate evaluation)

The glass plate was weighed on an electronic balance before and after the glass plate polishing test. The reduction in the thickness of the glass plate was calculated based on the weight loss, area, and the specific gravity of the glass plate. Based on the reduction obtained, the average polishing rate for 30 minutes of polishing was calculated (in the unit of µm/30 min).

The polishing rate herein is the average of the polishing rates of 10 glass plates. Tables 1 and 2 each show the polishing rates of the examples and the comparative examples.

### (Washing performance evaluation)

Glass plates polished under various conditions were immersed in a 20% (by weight) sulfuric acid at 70°C for 5 minutes. The glass plates were then ultrasonic-cleaned with pure water and IPA, and dried. The presence of residual foreign substances on the glass surface was checked. The evaluation criteria are shown below.
○: No residual foreign substance was observed on the surface of 10 glass plates polished under the same conditions.
X: Residual foreign substances were observed. A numerical value in brackets indicates the number of glass plates on which foreign substances were observed.

### (Scratch evaluation)

The polished surface of the glass plate after the polishing test was visually observed to check the presence of scratches. Tables 1 and 2 show the results. The absence of scratches is indicated by "O" (=OK), and the presence of scratches is indicated by "×" (=Defect).

**[Table 1]**

| | | Base particles | | Composition of polishing material (parts by weight) | | | | | | | Firing temperature (°C) | Polishing rate (*µ*m/30 min) | Washing performance evaluation | Scratch evaluation |
|---|---|---|---|---|---|---|---|---|---|---|---|---|---|---|
| | Composition | Particle size (*µ*m) | Shape | TiO₂ | ZrO₂ | ZnO | CaCO₃ | CeO₂ | Al₂ O₃ | MgO | | | | |
| Example 1 | TiO₂ | 0.40 | Spherical | 100 | | | | 10 | | | 900 | 25.7 | ×(10) | ○ |
| Example 2 | TiO₂ | 0.26 | Spherical | 100 | | | | 10 | | | 900 | 22.5 | ×(10) | ○ |
| Example 3 | TiO₂ | 0.40 | Spherical | 100 | | | | 5 | | | 900 | 24.6 | ×(10) | ○ |
| Example 4 | TiO₂ | 0.40 | Spherical | 100 | | | | 20 | | | 900 | 27.2 | ×(10) | ○ |
| Example 5 | TiO₂ | 0.40 | Spherical | 100 | | | | 50 | | | 900 | 27.8 | ×(10) | ○ |
| Example 6 | TiO₂ | 0.40 | Spherical | 100 | | | | 10 | | | 900 | 22.1 | ×(10) | ○ |
| Example 7 | ZrO₂ | 1.00 | Spherical | | 100 | | | 5 | | | 900 | 25.7 | ×(10) | ○ |
| Example 8 | TiO₂ | 0.40 | Spherical | 100 | | | | 10 | | 5 | 900 | 26.3 | ×(10) | ○ |
| Example 9 | TiO₂ | 0.40 | Spherical | 100 | | | | 10 | 10 | | 900 | 27.2 | ×(10) | ○ |
| Example 10 | TiO₂ | 0.40 | Spherical | 100 | | | | 10 | 10 | | 950 | 27.4 | ×(10) | ○ |
| Comparative Example 1 | TiO₂ | 0.26 | Spherical | 100 | | | | | | | No firing treatment | 16.1 | ×(10) | ○ |
| Comparative Example 2 | TiO₂ | 0.40 | Spherical | 100 | | | | | | | No firing treatment | 19.3 | ×(10) | ○ |
| Comparative Example 3 | TiO₂ | 0.26 | Spherical | 100 | | | | | 2 | | No firing treatment | 10.6 | ×(10) | × |
| Comparative Example 4 | TiO₂ | 0.26 | Spherical | 100 | | | | 10 | | | No firing treatment | 18.2 | ×(10) | ○ |
| Comparative Example 5 | TiO₂ | 0.26 | Spherical | 100 | | | | 10 | | | No firing treatment | 17.1 | ×(10) | ○ |
| Comparative Example 6 | ZrO₂ | 1.00 | Spherical | | 100 | | | | | | No firing treatment | 24.6 | ×(10) | × |
| Comparative Example 7 | | Cerium oxide for polishing glass "SHOROX A-10"(SHOWA DENKO K.K.) | | | | | | | | | | 28.0 | ×(10) | ○ |

**[Table 2]**

| | | Base particles | | Composition of polishing material (parts by weight) | | | | | | | Firing temperature (°C) | Polishing rate (*µ*m/30 min) | Washing performance evaluation | Scratch evaluation |
|---|---|---|---|---|---|---|---|---|---|---|---|---|---|---|
| | Composition | Particle size (*µ*m) | Shape | TiO₂ | ZrO₂ | ZnO | CaCO₃ | CeO₂ | Al₂O₃ | MgO | | | | |
| Example 11 | ZnO | 2.00 | Spherical | | | 100 | | 10 | 10 | | 900 | 18.2 | ○ | ○ |
| Example 12 | CaCO₃ | 0.15 | Spherical | | | | 100 | 10 | 10 | | 900 | 16.8 | ○ | ○ |
| Example 13 | ZnO | 1.00 | Plate | | | 100 | | 10 | 10 | | 900 | 19.6 | ○ | ○ |
| Comparative Example 8 | ZnO | 2.00 | Spherical | | | 100 | | | | | No firing treatment | 7.6 | ○ | ○ |
| Comparative Example 9 | ZnO | 1.00 | Plate | | | 100 | | | | | No firing treatment | 14.0 | ○ | ○ |

In the case of using the composite particulate material for polishing glass produced in each example, the polishing rate was not lower than 22.1 µm/30 min and no scratches were found on the polished surface of the glass.

In other words, in each example, a high polishing rate was maintained even though the used amount of cerium oxide is small (5 to 50% by weight in the whole polishing material).

The composite particulate materials of Example 9 and Example 1 are different only in the presence of an aluminum oxide layer (Example 9) on the surface of a titanium oxide base particle. Aluminum oxide on the base particle surface has a higher Mohs hardness than titanium oxide, providing still superior mechanical polishing effect to that of titanium oxide. Accordingly, the polishing rate is higher in Example 9 than in Example 1.

In Examples 11 and 12, a zinc oxide particle and a calcium carbonate particle were respectively used as a base particle, instead of the titanium oxide particle in Example 9. The Zinc oxide particle and calcium carbonate particle are easily dissolved in acids, and therefore show superior washing performance in the washing step of the glass polishing to the polishing material containing cerium oxide for polishing glass of Comparative Example 7, a titanium oxide particle, or a zirconium oxide base material. Accordingly, no residual foreign substances were found on the surface of washed glass.

A plate-like particle was used as a base particle in Example 13. In Examples 11 and 13, zinc oxide that shows excellent washing performance was used as the base material. A higher polishing rate was achieved in Example 13 in which a plate-like particle was used as a base particle, than in Example 11 in which a spherical particle was used as a base particle.

In a case where the polishing material used was the particulate material for polishing glass produced in Comparative Example 1 or 2, the polishing rate was low because the polishing material did not contain cerium oxide and failed to cause chemical polishing.

In a case where the polishing material used was the particulate material for polishing glass produced in Comparative Example 3, the polishing rate was low because the polishing material did not contain cerium oxide and failed to cause chemical polishing. In addition, the presence of an aluminum hydroxide layer caused formation of scratches on the polished surface.

In Comparative Example 4, the firing step was not carried out after coating with the cerium oxide precursor. In such a case, cerium oxide was not carried on the surface of a base particle of the particulate material for polishing glass, resulting in a reduction in the polishing rate.

In Comparative Example 5, titanium oxide and cerium oxide were mixed only, and cerium oxide was not carried on the surface of a base particle of the particulate material for polishing glass, resulting in a reduction in the polishing rate.

In the case where the particulate material for polishing glass prepared in Comparative Example 6 was used as the polishing material, the polishing rate was high. However, scratches were formed on the polished surface because the surface of the zirconium oxide particle directly came into contact with the glass surface.

In Comparative Example 7, cerium oxide for polishing glass was used as the polishing material. In comparison between Comparative Example 7 and each example, the particulate material for polishing glass prepared in each example shows substantially the same performance as the cerium oxide for polishing glass.

In the case where the particulate material for polishing glass prepared in Comparative Example 8 was used as the polishing material, the washing performance was excellent because the base material was zinc oxide that is easily dissolved in acids. However, the polishing rate was lowered because cerium oxide was not carried on the surface of a base particle.

In Comparative Example 9, a base particle used was a zinc oxide particle having a plate-like shape. Accordingly, washing performance was excellent and the polishing rate was higher than that in Comparative Example 8. The polishing rate was however lower than that in Example 13 because cerium oxide was not carried on the surface of a base particle.

### REFERENCE SIGNS LIST

- 1:: Composite particles for polishing glass
- 10:: Titanium oxide particle
- 20:: Cerium oxide particle
- 110:: Titanium oxide particle
- 120:: Cerium hydroxide

## Claims

1. A composite particulate material for polishing glass, each particle thereof comprising:
a base particle selected from a particle of titanium oxide, zirconium oxide, barium sulfate, synthetic mica, zinc oxide, and calcium carbonate; and
one or more cerium oxide particles having an average primary particle size between 0.02 and 0.10 µm, which is the average of unidirectional particle sizes of 1,000 individual particles, not overlapped with one another, measured in a visual field of an image observed by transmission electron microscope taken at 20,000 magnification, and insularly carried on the surface of the base particle or on the base particle surface-treated with alumina.

2. The composite particulate material according to Claim 1,
wherein the base particle has a spherical or plate shape.

3. The composite particulate material according to Claim 1 or 2,
wherein the cerium oxide particles are composited with a compound containing at least one element selected from the group consisting of fluorine, phosphor, alkaline metals, and alkaline earth metals.

4. The composite particulate material according to any one of Claims 1 to 3,
wherein the base particle is surface-treated with alumina.

5. The composite particulate material according to any one of Claims 1 to 4,
wherein the base particle has an average primary particle size of 0.01 to 5 µm.

6. The composite particulate material according to any one of Claims 1 to 5,
wherein the amount of the cerium oxide particles is 1 to 50 parts by weight for 100 parts by weight of the base particle.

7. The composite particulate material according to Claim 6,
wherein the amount of the cerium oxide particles is 5 to 10 parts by weight for 100 parts by weight of the base particle.

8. A method for producing the composite particulate material according to any one of claims 1 to 7, the method comprising the steps of:
covering the surface of a base particle selected from a particle of titanium oxide, zirconium oxide, barium sulfate, synthetic mica, zinc oxide, and calcium carbonate, with a cerium oxide precursor;
firing the thus-covered particle at a temperature within the range from 700°C to 1000°C; and
grinding the fired particle,
wherein in the covering, the base particle is added to water to prepare a slurry, a raw material of a cerium oxide precursor is added to the slurry, the slurry is neutralized to a pH of 6 to 8 and aged, and the resulting slurry is then subjected to washing, solid-liquid separation, and drying.

9. The method according to Claim 8,
wherein in the covering, the base particle selected from a particle of titanium oxide, zirconium oxide, barium sulfate, synthetic mica, zinc oxide, and calcium carbonate is first surface treated with alumina, and then is covered with a cerium oxide precursor.

## Patentansprüche

1. Teilchenförmiges Verbundstoffmaterial zum Polieren von Glas, jedes Teilchen davon umfassend:
ein Grundteilchen ausgewählt aus einem Teilchen von Titandioxid, Zirconiumoxid, Bariumsulfat, synthetischem Glimmer, Zinkoxid und Calciumcarbonat, und
ein oder mehr Ceroxidteilchen, die eine durchschnittliche primäre Teilchengröße zwischen 0,02 und 0,10 µm aufweisen, was der Durchschnitt unidirektioneller Teilchengrößen von 1.000 einzelnen Teilchen ist, die einander nicht überlappen, gemessen in einem sichtbaren Bereich eines Bilds, das durch ein Durchstrahlungselektronenmikroskop bei 20.000-facher Vergrößerung aufgenommen wurde, und die inselförmig auf der Oberfläche des Grundteilchens oder auf dem mit Aluminiumoxid oberflächenbehandelten Grundteilchen getragen werden.

2. Teilchenförmiges Verbundstoffmaterial nach Anspruch 1,
wobei das Grundteilchen eine kugelförmige oder flache Gestalt aufweist.

3. Teilchenförmiges Verbundstoffmaterial nach Anspruch 1 oder 2,
wobei die Ceroxidteilchen mit einer Verbindung, die mindestens ein aus der aus Fluor, Phosphor, Alkalimetallen und Erdalkalimetallen bestehenden Gruppe ausgewähltes Element enthält, zusammengesetzt sind.

4. Teilchenförmiges Verbundstoffmaterial nach einem der Ansprüche 1 bis 3,
wobei das Grundteilchen mit Aluminiumoxid oberflächenbehandelt ist.

5. Teilchenförmiges Verbundstoffmaterial nach einem der Ansprüche 1 bis 4,
wobei das Grundteilchen eine durchschnittliche primäre Teilchengröße von 0,01 bis 5 µm aufweist.

6. Teilchenförmiges Verbundstoffmaterial nach einem der Ansprüche 1 bis 5,
wobei die Menge der Ceroxidteilchen 1 bis 50 Gewichtsteile pro 100 Gewichtsteile des Grundteilchens beträgt.

7. Teilchenförmiges Verbundstoffmaterial nach Anspruch 6,
wobei die Menge der Ceroxidteilchen 5 bis10 Gewichtsteile pro 100 Gewichtsteile des Grundteilchens beträgt.

8. Verfahren zum Herstellen des teilchenförmigen Verbundstoffmaterials nach einem der Ansprüche 1 bis 7, wobei das Verfahren die Schritte umfasst des:
Bedeckens der Oberfläche eines Grundteilchens ausgewählt aus einem Teilchen von Titandioxid, Zirconiumoxid, Bariumsulfat, synthetischem Glimmer, Zinkoxid und Calciumcarbonat mit einem Ceroxidvorläufer,
Brennens des so bedeckten Teilchens bei einer Temperatur innerhalb des Bereichs von 700 °C bis 1000 °C und
Mahlens des gebrannten Teilchens,
wobei bei dem Bedecken das Grundteilchen Wasser zugegeben wird, um eine Aufschlämmung herzustellen, ein Rohmaterial aus einem Ceroxidvorläufer der Aufschlämmung zugegeben wird, die Aufschlämmung auf einen pH-Wert von 6 bis 8 neutralisiert und gealtert wird und die resultierende Aufschlämmung dann Waschen, Feststoff-Flüssigkeitstrennen und Trocknen unterworfen wird.

9. Verfahren nach Anspruch 8,
wobei bei dem Bedecken das Grundteilchen ausgewählt unter einem Teilchen von Titandioxid, Zirconiumoxid, Bariumsulfat, synthetischem Glimmer, Zinkoxid und Calciumcarbonat zuerst mit Aluminiumoxid oberflächenbehandelt und dann mit einem Ceroxidvorläufer bedeckt wird.

## Revendications

1. Matériau particulaire composite pour polir du verre, chaque particule de celui-ci comprenant :
une particule de base choisie parmi une particule d'oxyde de titane, oxyde de zirconium, sulfate de baryum, mica synthétique, oxyde de zinc, et carbonate de calcium ; et
une ou plusieurs particules d'oxyde de cérium présentant une taille moyenne de particule primaire de 0,02 à 0,10 µm, laquelle est la moyenne de tailles de particules unidirectionnelles de 1 000 particules individuelles, ne se chevauchant pas l'une avec l'autre, mesurées dans un champ visuel d'une image observée par un microscope électronique à transmission prise à un agrandissement de 20 000, et réalisée de manière insulaire sur la surface de la particule de base ou sur la surface de particule de base traitée avec de l'alumine.

2. Matériau particulaire composite selon la revendication 1, dans lequel la particule de base présente une forme sphérique ou de plaque.

3. Matériau particulaire composite selon la revendication 1 ou 2, dans lequel les particules d'oxyde de cérium sont composées d'un composé contenant au moins un élément choisi dans le groupe constitué de fluor, phosphore, métaux alcalins, et métaux alcalinoterreux.

4. Matériau particulaire composite selon l'une quelconque des revendications 1 à 3, dans lequel la particule de base est traitée en surface avec de l'alumine.

5. Matériau particulaire composite selon l'une quelconque des revendications 1 à 4, dans lequel la particule de base présente une taille moyenne de particule primaire de 0,01 à 5 µm.

6. Matériau particulaire composite selon l'une quelconque des revendications 1 à 5, dans lequel la quantité des particules d'oxyde de cérium est de 1 à 50 parties en masse pour 100 parties en masse de la particule de base.

7. Matériau particulaire composite selon la revendication 6, dans lequel la quantité des particules d'oxyde de cérium est de 5 à 10 parties en masse pour 100 parties en masse de la particule de base.

8. Procédé de production du matériau particulaire composite selon l'une quelconque des revendications 1 à 7, le procédé comprenant les étapes de :
couverture de la surface d'une particule de base choisie parmi une particule d'oxyde de titane, oxyde de zirconium, sulfate de baryum, mica synthétique, oxyde de zinc, et carbonate de calcium, avec un précurseur d'oxyde de cérium ;
cuisson de la particule ainsi couverte à une température dans l'intervalle de 700°C à 1 000°C ; et
broyage de la particule cuite,
dans lequel dans la couverture, la particule de base est ajoutée à de l'eau pour préparer une suspension, une matière première d'un précurseur d'oxyde de cérium est ajoutée à la suspension, la suspension est neutralisée à un pH de 6 à 8 et vieillie, et la suspension résultante est ensuite soumise à un lavage, une séparation solide-liquide, et un séchage.

9. Procédé selon la revendication 8, dans lequel dans la couverture, la particule de base choisie parmi une particule d'oxyde de titane, oxyde de zirconium, sulfate de baryum, mica synthétique, oxyde de zinc, et carbonate de calcium est premièrement traitée en surface avec de l'alumine, et est ensuite couverte avec un précurseur d'oxyde de cérium.
